# EUROPÄISCHE PATENTSCHRIFT

(11) **EP 1 140 593 B1**
(45) Veröffentlichungstag und Bekanntmachung des Hinweises auf die Patenterteilung: **04.05.2005**
(21) Anmeldenummer: 00974451.7
(22) Anmeldetag: 25.10.2000
(51) Int. Cl.: B60S 1/52, B60S 1/60

(54) **DÜSENTRÄGER MIT EINER ABDECKKAPPE**
NOZZLE SUPPORT WITH A CAP COVER
PORTE-GICLEUR DOTE D'UN CAPUCHON

(30) Priorität: 12.11.1999 DE 19954413
(43) Veröffentlichungstag der Anmeldung: 10.10.2001
(73) Patentinhaber: Bayerische Motoren Werke Aktiengesellschaft, 80809 München (DE)
(72) Erfinder: DÜRMAIER, Fritz, 84079 Bruckberg (DE)
(86) Internationale Anmeldenummer: PCT/EP2000/010490
(87) Internationale Veröffentlichungsnummer: WO 2001/036239

(56) Entgegenhaltungen:
- EP-A- 0 395 931
- DE-A- 19 811 163

## Beschreibung

Die Erfindung betrifft einen Düsenträger mit einer Abdeckkappe nach dem Oberbegriff des Anspruchs 1.

Aus der DE 198 11 163 A1 ist ein Düsenträger mit einer Abdeckkappe bekannt, wobei sich die Abdeckkappe in der eingefahrenen Position des Düsenträgers selbsttätig in der Karosserieöffnung ausrichtet. Die Ausrichtung erfolgt entgegen einem Reibungswiderstand quer zur Bewegungsrichtung des Düsenträgers, so dass nach erfolgter Zentrierung die Lage der Abdeckkappe in der eingefahrenen Position durch Reibschluss fixiert ist.

Aufgabe der Erfindung ist es, den bekannten Düsenträger mit einer Abdeckkappe weiterzubilden.

Diese Aufgabe wird durch die Merkmale des Anspruchs 1 gelöst, indem an einem mit dem Düsenträger verbundenen Klemmteil einerseits und an der Abdeckkappe andererseits aufeinander zuweisende, Formschluss erzeugende Einrichtungen vorgesehen sind. In der ausgefahrenen Position des Düsenträgers greifen die Formschluss erzeugenden Einrichtungen so ineinander, dass die Abdeckkappe nicht verschieblich mit dem Düsenträger verbunden ist, um ein Flattern der Abdeckkappe infolge der Umströmung durch den Fahrtwind zu verhindern. In der eingefahrenen Position des Düsenträgers hingegen sind die Formschluss erzeugenden Einrichtungen außer Eingriff, so dass sich die Abdeckkappe durch diese "schwimmende" Lagerung selbsttätig entlang des Randes der Karosserieöffnung ausrichten kann. Hierdurch entsteht allseitig eine gleichmäßige Überlappung mit dem Karosserieteil bzw. ein gleichmäßiges Fugenbild. Außerdem verringert sich der Montageaufwand, da bei der Erstmontage oder im Reparaturfall keine zeitaufwendige Justierung zum Ausgleich von Bauteil- und Montagetoleranzen erforderlich ist. Auch unterschiedliche temperaturbedingte Ausdehnungen der beteiligten Bauteile werden selbsttätig ausgeglichen.

Vorteilhafte Ausgestaltungen der Erfindung sind Gegenstand der Unteransprüche.

Ein mögliches Ausführungsbeispiel der Erfindung ist in der Zeichnung dargestellt und wird nachfolgend näher erläutert. Es zeigt:
- Figur 1: eine Scheinwerfer-Waschvorrichtung mit erfindungsgemäßer Ausgestaltung von Düsenträger und Abdeckkappe, in perspektivischer Ansicht,
- Figur 2: einen Horizontalschnitt der Anordnung von Figur 1 entlang der Schnittverlaufsebene A-A, in der eingefahrenen Position des Düsenträgers und
- Figur 3: eine der Figur 2 entsprechende Darstellung der ausgefahrenen Position des Düsenträgers.

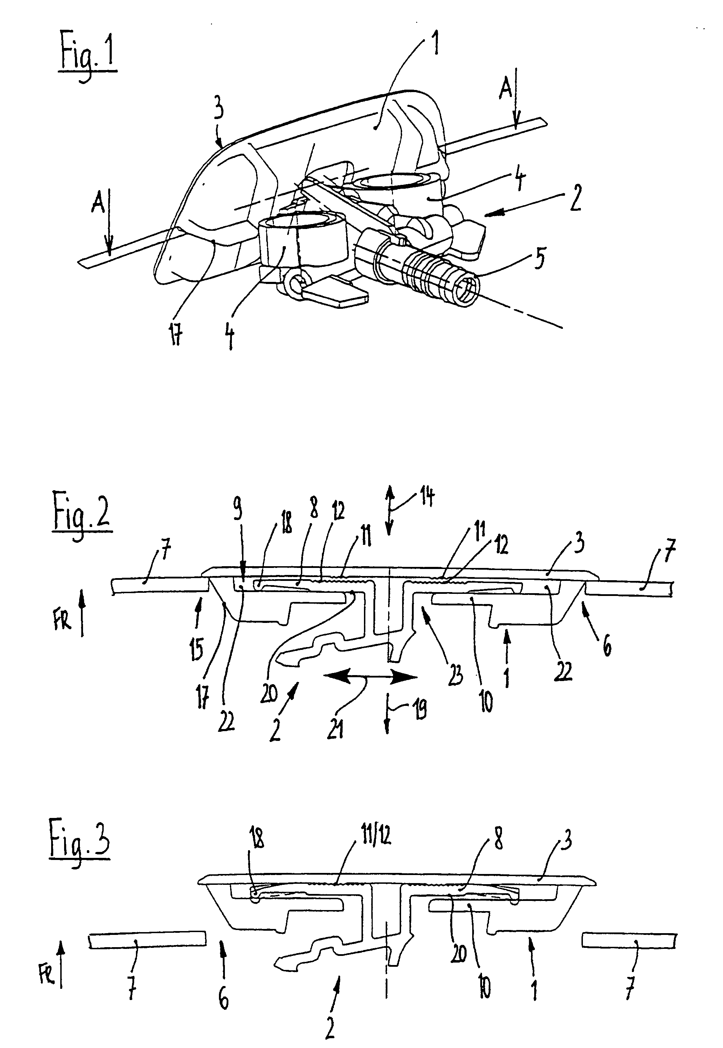

Figur 1 zeigt eine Scheinwerfer-Waschvorrichtung, von der unter anderem ein Düsenträger 2 sowie eine Abdeckkappe 3 dargestellt sind. Der Düsenträger 2 weist zwei ringförmige Aufnahmen 4 für nicht dargestellte Reinigungsdüsen auf. Die Versorgung mit Scheibenreinigungsflüssigkeit erfolgt über einen Rohrstutzen 5.

Wie aus den Figuren 2 und 3 hervorgeht, ist die Abdeckkappe 3 zum Verschließen einer Öffnung 6 in einem Außenhautbauteil 7 eines Kraftfahrzeuges, beispielsweise in einem Stoßfänger, vorgesehen. Die Abdeckkappe 3 bildet die Vorderseite eines Gehäuses 1. Eine Kammer 9 im Inneren des Gehäuses 1, die vorderseitig von der Abdeckkappe 3 und rückseitig von einer Wand 10 des Gehäuses 1 begrenzt wird, nimmt ein plattenförmiges Klemmteil 8 auf. An der Abdeckkappe 3 und am Klemmteil 8 sind aufeinander zuweisende Verzahnungsbereiche 11 bzw. 12 vorgesehen. Die Fahrtrichtung des Kraftfahrzeuges ist durch den Pfeil FR bezeichnet, die hierzu etwa parallel verlaufende Ausfahr- bzw. Einfahrbewegung des Düsenträgers 2 durch den Doppelpfeil 14.

In Figur 2 ist die eingefahrene Position des Düsenträgers 2 dargestellt, in der die Abdeckkappe 3 die Karosserieöffnung 6 verschließt. Hierbei sind die beiden Verzahnungsbereiche 11 und 12 außer Eingriff, so dass sich die Abdeckkappe 3 entlang des Randes 15 der Karosserieöffnung 6 derart ausrichten kann, dass der Rand 16 der Abdeckkappe 3 mit gleichmäßigem Überstand die Karosserieöffnung 6 überdeckt. Der Doppelpfeil 21 in Figur 2 veranschaulicht die im eingefahrenen Zustand gegebene "radiale" Verschieblichkeit der Abdeckkappe 3 gegenüber dem Düsenträger 2, die zusätzlich zu der dargestellten horizontalen Verschieblichkeit in Richtung des Doppelpfeils 21 selbstverständlich in allen Richtungen senkrecht zur Bewegungsrichtung 14 des Düsenträgers 2 gegeben ist. Zur Sicherstellung der Zentrierung sind am Gehäuse 1 Anlaufschrägen 17 vorgesehen. Um die Ausrichtung zu erleichtern, sind die Anlageflächen an der Rückseite 20 des Klemmteils 8 und an der Wand 10 reibungsarm ausgeführt. Die Ausrichtung gemäß dem Doppelpfeil 21 wird durch allseitige Freiräume 22 in den Randbereichen der Kammer 9 sowie durch eine entsprechend groß dimensionierte mittige Öffnung 23 in der Wand 10 sichergestellt.

Demgegenüber ist in Figur 3 die ausgefahrene Position des Düsenträgers 2 dargestellt, in der die Verzahnungsbereiche 11 und 12 ineinander greifen. Hierdurch wird ein Formschluss zwischen der Abdeckkappe 3 und dem Düsenträger 2 erzeugt, der auch bei höheren Fahrgeschwindigkeiten des Kraftfahrzeuges und dementsprechend großem Winddruck und bei Verwirbelungen ein Flattern der Abdeckkappe 3 verhindert. Das Ineinandergreifen der Verzahnungsbereiche 11 und 12 wird durch eine Vorspannung sichergestellt, welche durch Randbereiche 18 des Klemmteils 8, die entgegen der Fahrtrichtung FR abgebogen sind und an der Wand 10 anliegen, erzeugt wird.

In der eingefahrenen Position des Düsenträgers 2, wie in Figur 2 dargestellt, wird die Vorspannung der Randbereiche 18 durch eine entsprechende Gegenkraft (Pfeil 19) kompensiert, die den Düsenträger 2 entgegen der Fahrtrichtung FR in seiner eingefahrenen Position fixiert. Unter der Wirkung dieser Kraft kommt die Rückseite 20 des Klemmteils 8 zur Anlage an der Wand 10, so dass eine definierte Lage des Düsenträgers 2 in Bezug auf die Fahrtrichtung FR vorliegt.

Der Formschluss zwischen Düsenträger 2 und Abdeckkappe 3 kann nicht nur durch Verzahnungen 11 und 12, sondern durch jede Art von Erhöhungen und Vertiefungen an den beiden Bauteilen erzeugt werden, beispielsweise durch Riffelungen, Kreuzrändelung etc. Selbstverständlich können die Formschluss erzeugenden Einrichtungen an beliebigen Stellen von Düsenträger 2 und Abdeckkappe 3 bzw. dem damit verbundenen Gehäuse 1 angeordnet sein. Anstelle der abgebogenen Bereiche 18 zur Erzeugung einer Vorspannung können auch separate federnde Elemente vorgesehen sein.

## Patentansprüche

1. Düsenträger mit einer Abdeckkappe für eine Scheinwerfer-Waschvorrichtung mit wenigstens einer Düse zur Reinigung einer Lichtscheibe eines Scheinwerfers eines Fahrzeugs, wobei der Düsenträger aus einer eingefahrenen Position in eine ausgefahrene Position verstellbar ist und mit der Verstellbewegung des Düsenträgers dieser durch eine Karosserieöffnung hindurchtritt, die in der eingefahrenen Position des Düsenträgers durch die mit dem Düsenträger mitbewegte Abdeckkappe verschließbar ist, wobei die Abdeckkappe gegenüber dem Düsenträger etwa senkrecht zur Bewegungsrichtung des Düsenträgers verschiebbar ist und sich durch eine Zentriereinrichtung in der eingefahrenen Position in der Karosserieöffnung selbsttätig ausrichtet,
**dadurch gekennzeichnet, dass** an der Abdeckkappe (3) einerseits und an einem am Düsenträger (2) angeordneten Klemmteil (8) andererseits aufeinander zuweisende, Formschluss erzeugende Einrichtungen (11, 12) vorgesehen sind, die in der ausgefahrenen Position des Düsenträgers (2) in Eingriff und in der eingefahrenen Position des Düsenträgers (2) außer Eingriff sind.

2. Düsenträger nach Anspruch 1,
**dadurch gekennzeichnet, dass** die Formschluss erzeugenden Einrichtungen (11, 12) von Erhebungen und/oder Vertiefungen an Abdeckkappe (3) und Klemmteil (8) gebildet werden.

3. Düsenträger nach Anspruch 1 und/oder 2,
**dadurch gekennzeichnet, dass** Mittel vorgesehen sind, die eine etwa parallel zur Bewegungsrichtung (14) des Düsenträgers (2) gerichtete Vorspannung zwischen Abdeckkappe (3) und Klemmteil (8) erzeugen, so dass die Formschluss erzeugenden Einrichtungen (11, 12) in der ausgefahrenen Position des Düsenträgers (2) in Eingriff sind.

4. Düsenträger nach Anspruch 3,
**dadurch gekennzeichnet, dass** das Klemmteil (8) durch seine Form und/oder seine Materialeigenschaften die Vorspannung erzeugt.

## Claims

1. A nozzle-holder comprising a cover cap for a headlamp washing device, comprising at least one nozzle for cleaning the glass pane of a vehicle headlamp, wherein the nozzle-holder is movable from a retracted into an extended position and during the movement of the nozzle-holder, it passes through an opening in the body which, in the retracted position of the nozzle-holder, is closable by the cover cap, which moves with the nozzle-holder, wherein the cap relative to the nozzle-holder is movable approximately at right angles to the direction of motion of the nozzle-holder and is automatically aligned by a centring device in the body opening when in the retracted position, **characterised in that** positively engaging devices (11, 12) pointing towards one another are provided on the cap (3) on the one hand and on a clamping part (8) on the nozzle-holder (2) on the other hand and engage when the nozzle-holder (2) is in the extended position and come out of engagement when the nozzle-holder (2) is in the retracted position.

2. A nozzle-holder according to claim 1, **characterised in that** the positively engaging devices (11, 12) are formed by raised portions and/or recesses on the cover cap (3) and the clamping part (8).

3. A nozzle-holder according to claim 1 or 2, **characterised in that** means are provided for generating a prestress between the cap (3) and clamping part (8) approximately parallel with the direction of motion (14) of the nozzle-holder (2), so that the positively engaging devices (11, 12) are in engagement when the nozzle-holder (2) is in the extended position.

4. A nozzle-holder according to claim 3, **characterised in that** the clamping part (8) generates the prestress owing to its shape and/or the properties of its material.

## Revendications

1. Porte-gicleur doté d'un capuchon destiné à un dispositif de lavage de projecteurs, comportant au moins un injecteur destiné au nettoyage d'une vitre d'un phare de véhicule, le porte-gicleur pouvant être déplacé depuis une position rentrée dans une position sortie et, avec le mouvement du porte-gicleur, celui-ci traversant une ouverture de carrosserie qui peut être obturée, dans la position rentrée du porte-gicleur, par le capuchon entraîné avec le porte-gicleur, le capuchon pouvant être déplacé approximativement perpendiculairement au sens du mouvement du porte-gicleur par rapport au porte-gicleur, et s'orientant de lui-même grâce à un dispositif de centrage dans la position rentrée dans l'ouverture de carrosserie.
**caractérisé en ce que**
sur le capuchon (3) d'une part, et sur une pièce de serrage (8) disposée sur le porte-gicleur (2) d'autre part, des dispositifs (11, 12) dirigés l'un vers l'autre et produisant un engagement positif, s'engagent l'un dans l'autre dans la position sortie du porte-gicleur (2) et se désolidarisent dans la position rentrée du porte-gicleur (2).

2. Porte-gicleur selon la revendication 1,
**caractérisé en ce que**
les dispositifs (11, 12) produisant un engagement positif sont constitués de surélévations et/ou de creux sur le capuchon (3) et la pièce de serrage (8).

3. Porte-gicleur selon la revendication 1 et/ou 2,
**caractérisé en ce que**
des moyens produisent entre le capuchon (3) et la pièce de serrage (8) une précontrainte approximativement parallèle au sens du déplacement (14) du porte-gicleur (2), de sorte que les dispositifs (11, 12) produisant l'engagement positif s'engagent l'un dans l'autre dans la position sortie du porte-gicleur (2).

4. Porte-gicleur selon la revendication 3,
**caractérisé en ce que**
la pièce de serrage (8) produit la précontrainte grâce à sa forme et/ou aux propriétés de la matière dont elle est constituée.
